# EUROPEAN PATENT APPLICATION

(11) **EP 3 605 330 A1**
(43) Date of publication of application: **05.02.2020**
(21) Application number: 18774354.7
(22) Date of filing: 30.03.2018
(51) Int. Cl.: G06F 9/50, G06F 9/455, H04L 12/70

(54) **VIRTUAL NETWORK FUNCTION MANAGEMENT DEVICE, VIRTUAL INFRASTRUCTURE MANAGEMENT DEVICE, AND VIRTUAL NETWORK FUNCTION CONSTRUCTION METHOD**

(30) Priority: 31.03.2017 JP 2017073037
(71) Applicant: NEC Corporation, Tokyo 108-8001 (JP)
(72) Inventor: ISHII, Yasuyuki, Tokyo 108-8001 (JP); NISHIGORI, Yutaka, Tokyo 108-8001 (JP); ZEMBUTSU, Hajime, Tokyo 108-8001 (JP)
(74) Representative: Robson, Aidan John
(86) International application number: PCT/JP2018/013778
(87) International publication number: WO 2018/181961

(57) **Abstract**

The invention enables optimal selection of a physical machine that causes operation of a VM configuring a virtual network function. A virtual network function management apparatus includes: a physical machine candidate query part configured to query, when creating a virtual network function, about a physical machine candidate in which a virtual machine configuring a virtual network function can be deployed, with respect to a virtual infrastructure management apparatus that manages a virtual infrastructure configured by using 2 or more types of physical machine; a physical machine selection part configured to select a physical machine that can satisfy performance required by the virtual network function, from among physical machine candidates received from the virtual infrastructure management apparatus; and a virtual machine creation instruction part configured to instruct the virtual infrastructure management apparatus to specify the selected physical machine and create a virtual machine configuring the virtual network function.

## Description

### FIELD

### (REFERENCE TO RELATED APPLICATION)

The present invention is based upon and claims the benefit of the priority of Japanese patent application No. 2017-073037, filed on March 31, 2017, the disclosure of which is incorporated herein in its entirety by reference thereto.

The present invention relates to a virtual network function management apparatus, a virtual infrastructure management apparatus, a virtual network function providing system, a virtual network function configuration method and program, and in particular, to a virtual network function management apparatus, a virtual infrastructure management apparatus, a virtual network function providing system, a virtual network function configuration method and a program, that configure a virtual network function using a virtual machine.

### BACKGROUND

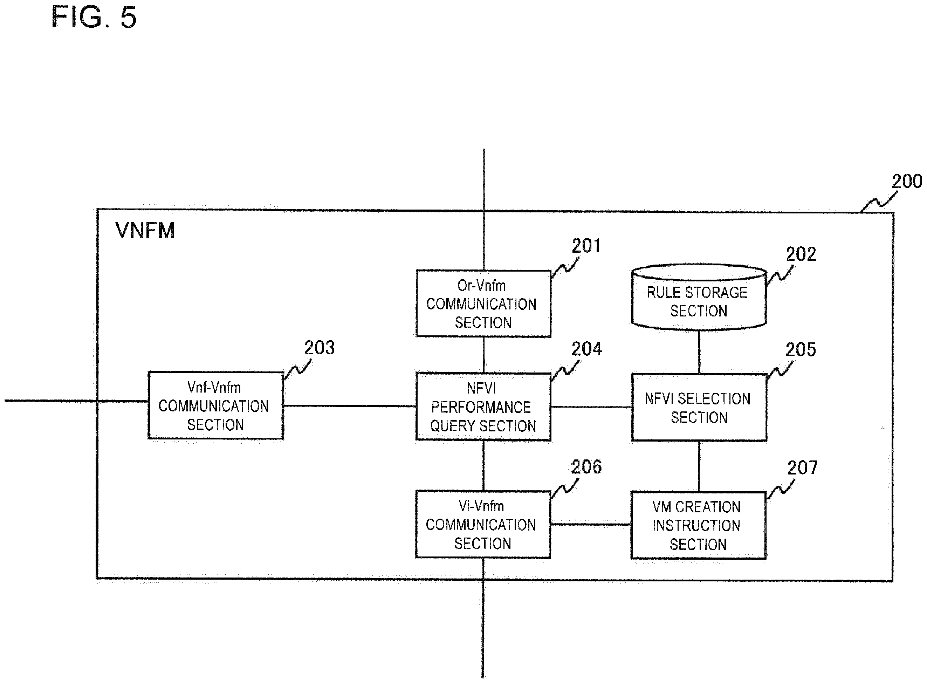

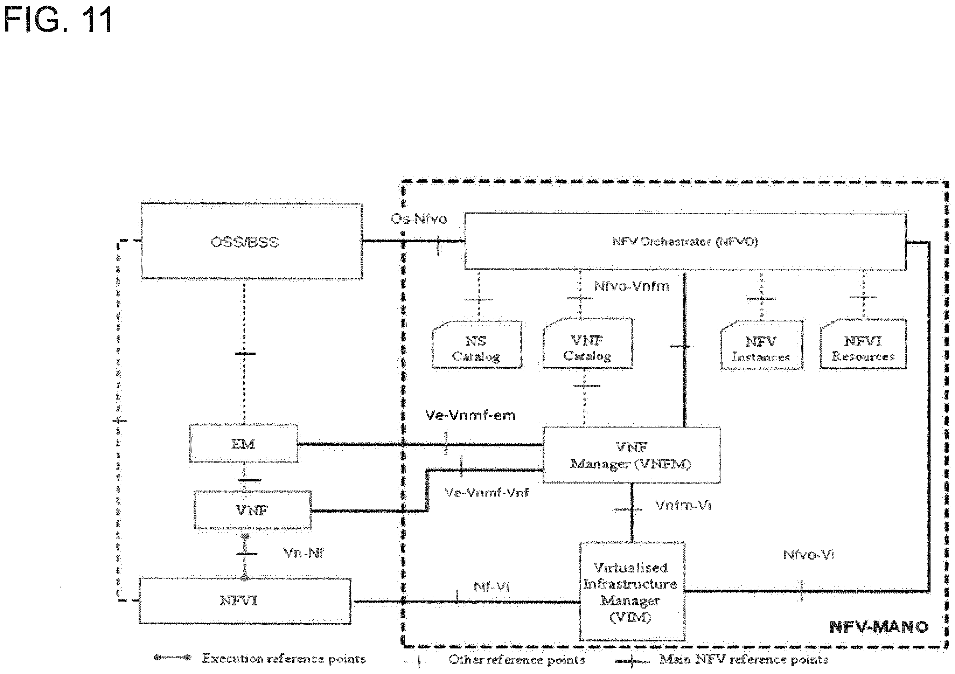

Non-Patent Literature 1 discloses a system referred to as network function virtualization (below, NFV) in which functions of various types of communication equipment in a network are realized in an operating system (OS) in which a general purpose server is virtualized, using virtualization technology. NTV is realized based on, for example, MANO (Management & Orchestration) architecture. FIG. 11 is a diagram citing Figure 5.1 (The NFV-MANO architectural framework with reference points) on page 23 of Non-Patent Literature 1.

Patent Literature 1 discloses a virtualization base selection apparatus that selects a physical server that deploys a VM which is a virtualized network function, from a NFVI (Network Functions Virtualization Infrastructure). According to the same literature, the virtualization base selection apparatus is provided with a physical resource conversion section 1 that converts an application request which is a logical request into a physical resource request, a server extraction section 2 that extracts a physical server that satisfies the physical resource request after the conversion from a physical server in the NFVI, and an optimum server selection section 3 that selects an optimum physical server from among the extracted physical servers.

Patent Literature 2 discloses an apparatus selection method that is said to enable selection of an optimal execution apparatus in execution of prescribed signal processing by a plurality of signal processing apparatuses. According to the same literature, a vector calculation section 1042 represents an available amount of processing resources for each of a plurality of servers, as a plurality of apparatus vectors, with respective processing resources as coordinate axes, and represents used amount of processing resources required for signal processing as a processing load vector with processing resources as coordinate axes. There is a description that an apparatus selection section 1044 selects, as an execution apparatus, a signal processing apparatus corresponding to an apparatus vector for which an angle forming the processing load vector is smallest, among the plurality of apparatus vectors.

### CITATION LIST

### PATENT LITERATURE

[PTL 1]
   Japanese Patent Kokai Publication No. JP2016-143365A
[PTL 2] Japanese Patent Kokai Publication No. JP2016-151902A

### NON PATENT LITERATURE

[NPL 1]
Non-Patent Literature 1: ETSI GS NFV-MAN 001 V1.1.1 (2014-12) Network Functions Virtualization (NFV); Management and Orchestration (online) (retrieved on March 24, 2017), Internet <http://www.etsi.org/deliver/etsi_gs/NFV-MAN/001_099/001/01.01.01_ 60/gs_NFV-MAN001v010101p.pdf>

### SUMMARY

### TECHNICAL PROBLEM

The following analysis is given according to the present invention. In NFV-MANO architecture of Non-Patent Literature 1, a virtual network function management apparatus (also known as VNF manager. Below "VNFM") in charge of a configuration of a virtual network function (below "VNF"), lifecycle management, and element management, does not hold information related to Network Functions Virtualization Infrastructure (NFVI). Therefore, when the VNFM creates a VNF, there is a possibility that the VM (virtual machine) is not deployed in a suitable physical machine.

With regard to a virtualized base selection apparatus of Patent Literature 1, there is no change in the point of converting an application request inputted by a system manager to a physical resource request, and performing selection of NFVI, and there is a possibility that, from the viewpoint of the VNFM, a VN is not deployed in an intended physical machine. A method of Patent Literature 2 also stops with presenting a method of representing available amount of physical resources with respect to a signal processing apparatus as an apparatus vector, and with usage amount of processing resources required in signal processing as a processing load vector, selecting a signal processing apparatus.

It is an object of the invention to provide a virtual network function management apparatus, a virtual infrastructure management apparatus, a virtual network function providing system, a virtual network function configuration method and a program, which can contribute to enriching a configuration to select a physical machine that operates a VM (virtual machine) configuring a virtual network function.

### SOLUTION TO PROBLEM

According to a first aspect, there is provided a virtual network function management apparatus comprising: a physical machine candidate query part configured to query, when creating a virtual network function, about a physical machine candidate in which a virtual machine configuring a virtual network function can be deployed, with respect to a virtual infrastructure management apparatus that manages a virtual infrastructure configured by using 2 or more types of physical machine; a physical machine selection part configured to select a physical machine that can satisfy performance required by the virtual network function, from among physical machine candidates received from the virtual infrastructure management apparatus; and a virtual machine creation instruction part configured to instruct the virtual infrastructure management apparatus to specify the selected physical machine and create a virtual machine configuring the virtual network function.

According to a second aspect, there is provided a virtual infrastructure management apparatus comprising: a physical machine candidate response part configured to respond, in response to a query from a virtual network function management apparatus, with a physical machine candidate in which a virtual machine configuring a virtual network function can be deployed, from among 2 or more types of physical machine that configure a virtual infrastructure; and a virtual machine creation part configured to create a virtual machine using a physical machine specified by the virtual network function management apparatus.

According to a third aspect, there is provided a virtual network function providing system that includes the virtual network function management apparatus, and the virtual infrastructure management apparatus.

According to a fourth aspect, there is provided a virtual network function configuration method, wherein a virtual network function management apparatus included in a virtual network function providing system: queries, when creating a virtual network function, about a physical machine candidate in which a virtual machine configuring a virtual network function can be deployed, with respect to a virtual infrastructure management apparatus that manages a virtual infrastructure configured by using 2 or more types of physical machine; selects a physical machine that can satisfy performance required by the virtual network function, from among physical machine candidates received from the virtual infrastructure management apparatus; and instructs the virtual infrastructure management apparatus to specify the selected physical machine and create a virtual machine configuring the virtual network function. The method is tied to a particular machine which is a virtual network function management apparatus that manages a virtual network function.

According to a fifth aspect, there is provided a virtual network function configuration method, wherein a virtual infrastructure management apparatus included in a virtual network function providing system: responds, in response to a query from a virtual network function management apparatus, with a physical machine candidate in which a virtual machine configuring a virtual network function can be deployed, from among 2 or more types of physical machine that configure a virtual infrastructure; and creates a virtual machine using a physical machine specified by the virtual network function management apparatus. The method is associated with a particular mechanism, which is a virtual infrastructure management apparatus that manages a virtual infrastructure.

According to a sixth aspect, there is provided a computer program for implementing a function of the virtual network function management apparatus or the virtual infrastructure management apparatus. It is to be noted that this program may be recorded on a computer-readable (non-transient) storage medium. That is, the present invention may be embodied as a computer program product.

### ADVANTAGEOUS EFFECTS OF INVENTION

According to the present invention, it is possible to contribute to enriching a configuration to select a physical machine that operates a VM configuring a virtual network function.

### BRIEF DESCRIPTION OF THE DRAWINGS

[Fig. 1]

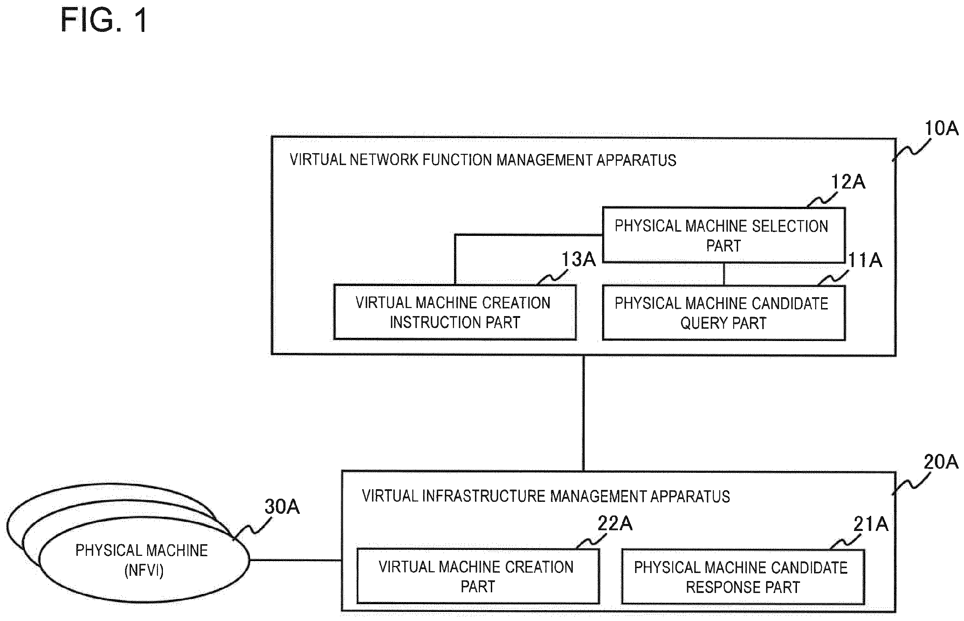

   FIG. 1 is a diagram illustrating a configuration of a first exemplary embodiment of the present invention.
[Fig. 2]

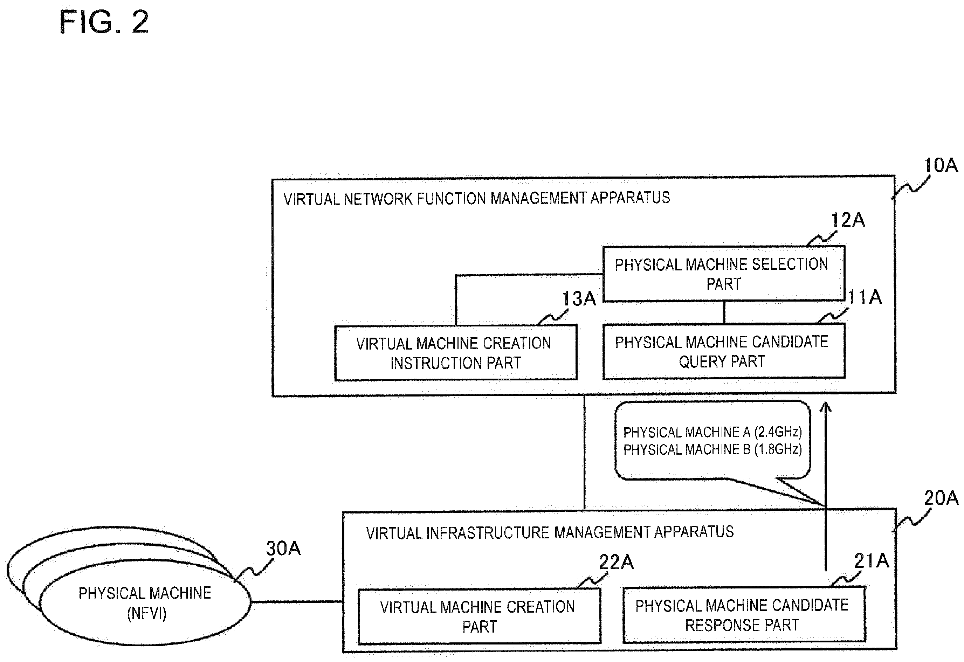

   FIG. 2 is a diagram illustrating operations of an exemplary embodiment of the invention.
[Fig. 3]

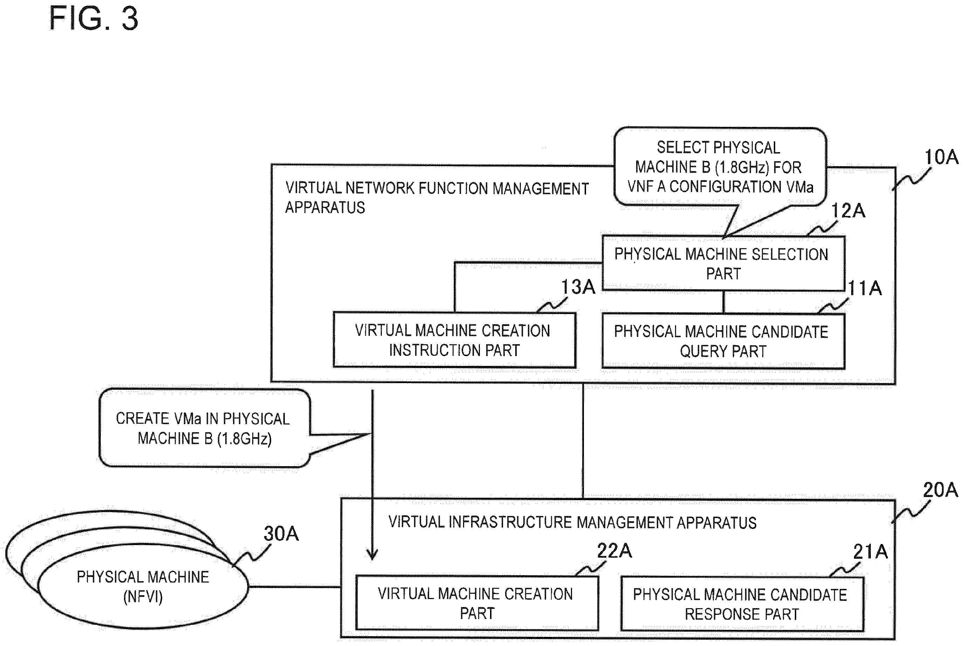

   FIG. 3 is a diagram illustrating operations of an exemplary embodiment of the invention.
[Fig. 4]

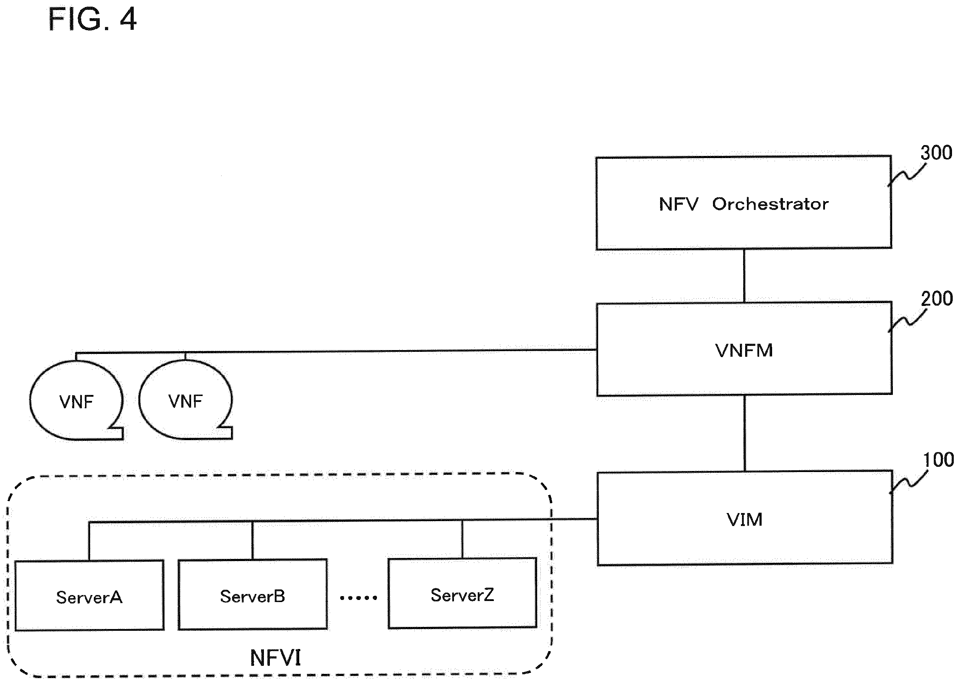

   FIG. 4 is a diagram illustrating a configuration of a virtual network function providing system in a first exemplary embodiment of the present invention.
[Fig. 5]
   FIG. 5 is a functional block diagram illustrating a configuration of a VNFM in the first exemplary embodiment of the invention.
[Fig. 6]

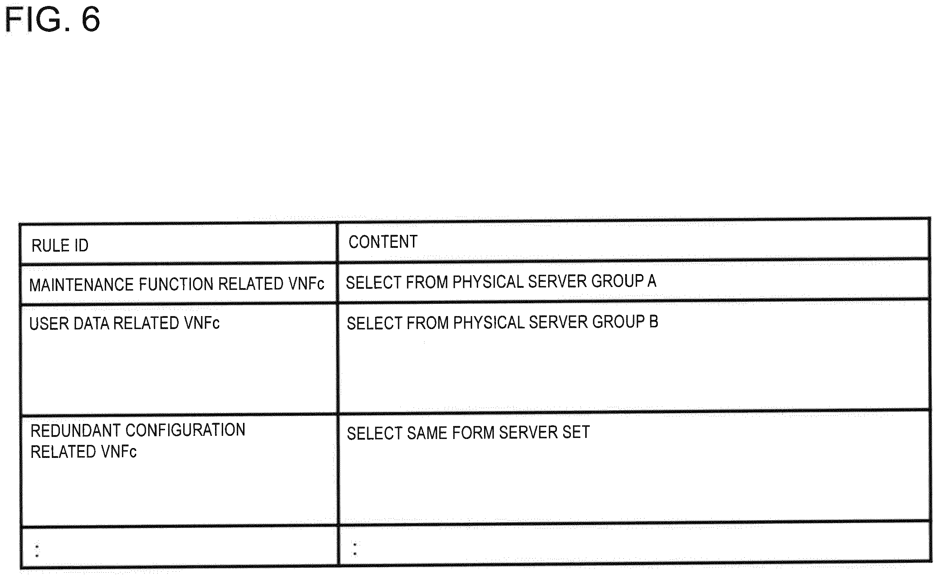

   FIG. 6 is a diagram illustrating an example of a selection rule for an NFVI held by the VNFM in the first exemplary embodiment of the invention.
[Fig. 7]

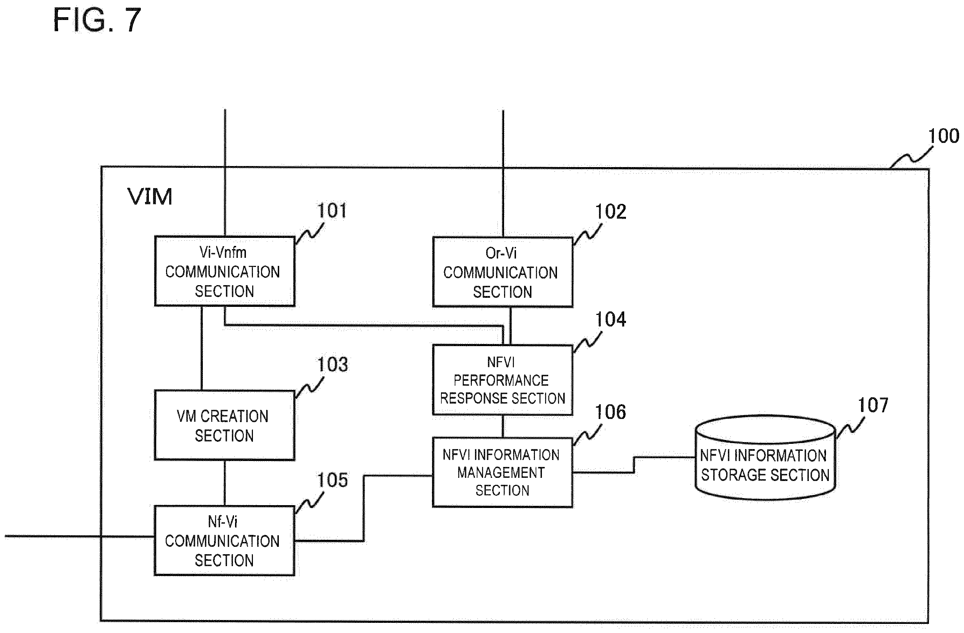

   FIG. 7 is a functional block diagram illustrating a configuration of a VIM in the first exemplary embodiment of the invention.
[Fig. 8]

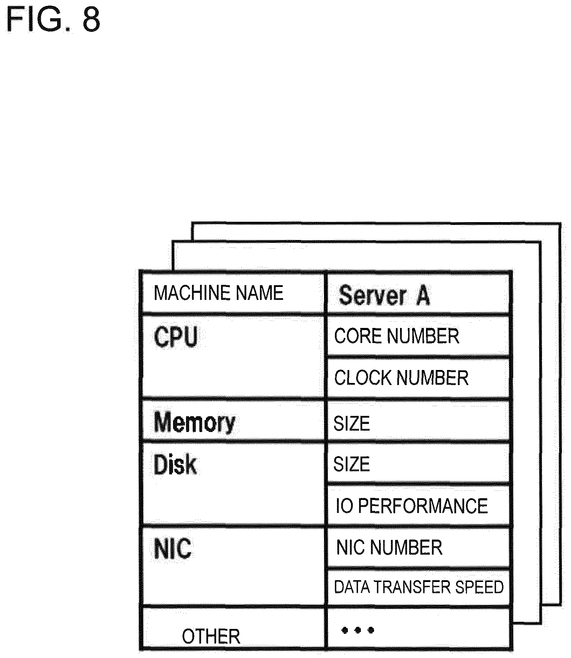

   FIG. 8 is a diagram illustrating an example of NFVI information provided to the VNFM side by a VIM in the first exemplary embodiment of the invention.
[Fig. 9]

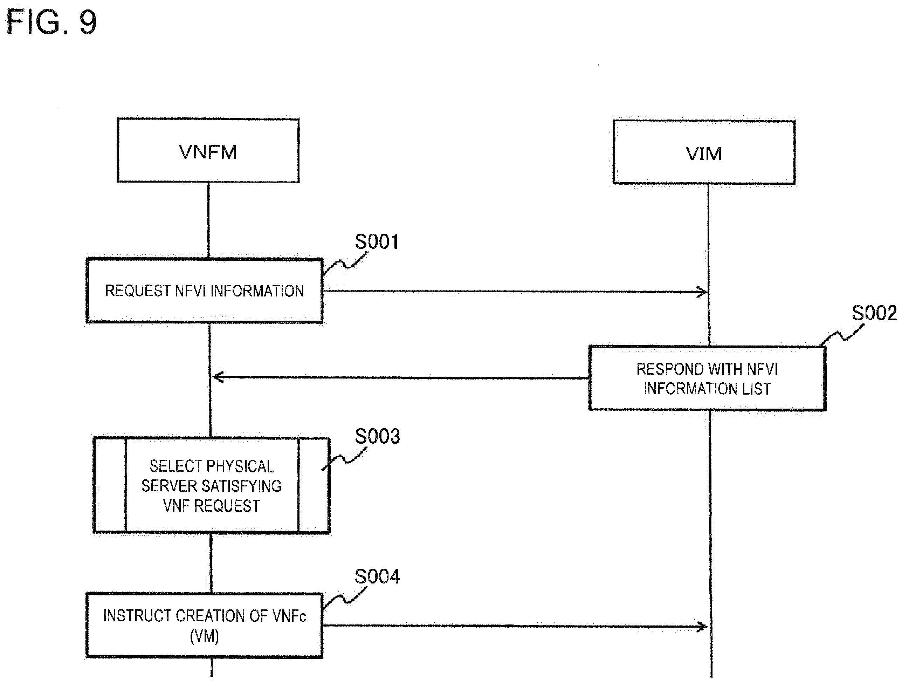

   FIG. 9 is a sequence diagram illustrating operations of the first exemplary embodiment of the invention.
[Fig. 10]

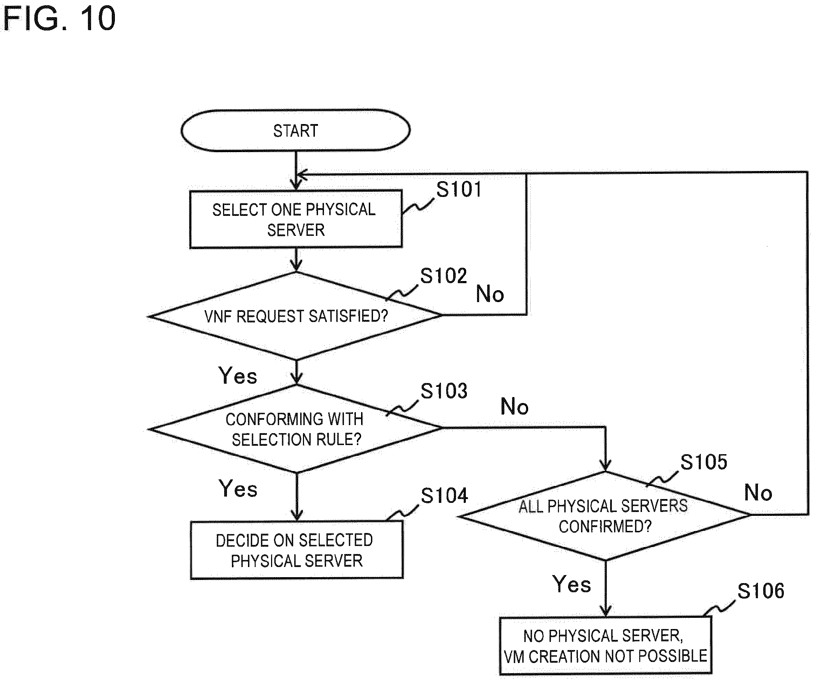

   FIG. 10 is a flowchart illustrating selection operations of the NFVI in the VNFM in the first exemplary embodiment of the invention.
[Fig. 11]
   FIG. 11 is a diagram illustrating NFV-MANO of an NFV architecture (citing Fig. 5.1 of Non-Patent Literature 1).

### MODES

First, a description is given of an outline of exemplary embodiments of the present invention, with reference to the drawings. It is to be noted that reference symbols in the drawings attached to this outline are added to respective elements for convenience as examples in order to aid understanding, and are not intended to limit the present invention to modes illustrated in the drawings. Connection lines between blocks in the diagrams referred to in the following description includes both unidirectional and bidirectional. Unidirectional arrows schematically illustrate flow of main signals (data), but do not exclude bidirectionality.

The present invention, in an exemplary embodiment thereof as shown in FIG. 1, can be implemented in a combination of a virtual network function management apparatus 10A, and a virtual infrastructure management apparatus 20A that manages a virtual infrastructure configured by 2 or more types of physical server having different performances. More specifically, the virtual network function management apparatus 10A is provided with a physical machine candidate query part 11A, a physical machine selection part 12A, and a virtual machine creation instruction part 13A. It is to be noted that in FIG. 1, an apparatus known as an orchestrator that manages and controls states of allocation of resources of the overall system is omitted.

The physical machine candidate query part 11A, when creating a virtual network function, makes a query about a physical machine candidate in which a virtual machine configuring the virtual network function can be deployed, with respect to the virtual infrastructure management apparatus 20A. The physical machine selection part 12A selects a physical machine satisfying a criterion required by the virtual network function, from among physical machine candidates received from the virtual infrastructure management apparatus 20A. In other words, the physical machine selection part 12A selects a physical machine that can satisfy performance required by the virtual network function. The virtual machine creation instruction part 13A instructs the virtual infrastructure management apparatus 20A to specify the selected physical machine, and create a virtual machine configuring the virtual network function.

Meanwhile, the virtual infrastructure management apparatus 20A that operates in coordination with the virtual network function management apparatus 10A is provided with a physical machine candidate response part 21A and a virtual machine creation part 22A. The physical machine candidate response part 21A responds with a physical machine candidate in which a virtual machine configuring the virtual network function can be deployed, from among 2 or more types of physical machine that configure a virtual infrastructure. It is to be noted that this response includes information related to performance and various data of each physical machine. The virtual machine creation part 22A creates a virtual machine, using the physical machine specified by the virtual network function management apparatus 10A.

For example, the virtual network function management apparatus 10A that starts creation of the virtual network function, in creating a certain virtual network function (VNF A), makes a query about allocatable physical machine candidates to the virtual infrastructure management apparatus 20A. In response thereto, the virtual infrastructure management apparatus 20A, as illustrated in FIG. 2, responds with the existence of 2 physical machines A and B, and the clock number for respective CPUs (Central Processing Unit).

The virtual network function management apparatus 10A, as shown in FIG. 3, has a response from the virtual infrastructure management apparatus 20A as described above, and selects physical machine B as a deployment destination of VMa that is a component element of the virtual network function (VNF A). In this case, the virtual network function management apparatus 10A specifies the physical machine B (1.8 GHz) and instructs creation of a virtual machine VMa that configures a virtual network function (VNF A), with respect to the virtual infrastructure management apparatus 20A.

As described above, in the present exemplary embodiment, information related to a physical machine (NFVI) candidate is provided to the virtual network function management apparatus 10A side. The virtual network function management apparatus 10A can determine a deployment destination of the virtual machine (VMa), using the physical machine candidate information provided.

It is to be noted that with regard to method of determination of deployment destination of the virtual machine that is a VNFc (VNF Component) configuring the virtual network function, consideration may be given to various types of method. For example, the virtual network function (VNF) may be a function for a maintenance operation system in which high response performance or the like is not required. In this case, consideration may be given to where the virtual network function management apparatus 10A allocates a physical machine with relatively low performance, among physical machines in the response from the virtual infrastructure management apparatus 20A. In this way, it is possible to inhibit a state in which a VM that does not require such a performance, is deployed in a physical machine of relatively high performance.

For example, conversely, the virtual network function (VNF) may be a function for a processing system for user data in which high response performance or the like is required. In this case, the virtual network function management apparatus 10A may allocate a physical machine with relatively high performance, among physical machines in a response from the virtual infrastructure management apparatus 20A. Furthermore, in a case where some VNFcs (VNF Components) of the virtual network function (VNF) have a redundant configuration, these VNFcs may select a physical machine set, to be deployed in equivalent physical machines. By so doing, it is possible to avoid a state of affairs in which VMs of an operation system and a standby system are deployed in physical machines of different performances.

### <First Exemplary Embodiment>

Continuing, a detailed description is given concerning a first exemplary embodiment applied to the present invention, in MANO (Management & Orchestration) architecture of Non-Patent Literature 1, making reference to the drawings. FIG. 4 is a diagram illustrating a configuration of a virtual network function providing system in the first exemplary embodiment of the present invention.

Referring to FIG. 4, a configuration is shown in which a VIM (Virtualized Infrastructure Manager) 100 that manages a virtualized infrastructure (NFVI), a VNFM 200 that manages a VNF operating in the NFVI, and an NFV Orchestrator 300 that performs management of overall system orchestration and service, are connected.

The VIM 100 corresponds to the abovementioned virtual infrastructure management apparatus, and in the MANO architecture that performs control of VNF, is principally in charge of management of NFVI configured by a physical machine, storage, a network resource and the like. In the present exemplary embodiment, a description is given in which, among the resources managed by the VIM 100, a plurality of physical servers, that are VM deployment destinations, are present (Server A to Z), and there is 1 or more physical servers with at least 1 performance value being different, such as CPU, memory or the like, in comparison with another physical server.

The VNFM 200 corresponds to the abovementioned virtual network function management apparatus, and requests at least physical server information, among VIM managed resources, from the VIM 100. The VNFM 200 refers to content of the information obtained from the VIM 100, requests deployment of VNFc (VM) that is a component of a VNF in a specified physical server, and configures the VNF. The VNFM 200 provides resources and constraint information required by the VNF, to the NFV Orchestrator 300.

The NFV Orchestrator 300 performs overall orchestration based on a service request from a user (OSS/BSS of FIG. 11), or the information provided by the VNFM 200.

FIG. 5 is a diagram illustrating a configuration of the VNFM of first exemplary embodiment of the present invention. Referring to FIG. 5, a configuration is shown that is provided with an Or-Vnfm communication section 201, a rule storage section 202, a Vnf-Vnfm communication section 203, an NFVI performance query section 204, an NFVI selection section 205, a Vi-Vnfm communication section 206, and a VM creation instruction section 207.

The Or-Vnfm communication section 201 is used in reception of a VNF creation request from the NFV Orchestrator 300 and in provision of information to the NFV Orchestrator 300. The Vnf-Vnfm communication section 203 is used in control of the VNF.

On receiving a VNF creation request from outside such as the NFV Orchestrator 300, the NFVI performance query section 204 requests NFVI information, with respect to the VIM 100, via the Vi-Vnfm communication section 206 or a dedicated application program interface (API). The NFVI information sent from the VIM 100 is sent to the NFVI selection section 205.

The NFVI selection section 205 queries the NFVI information sent from the VIM 100, to select a physical server satisfying a VNF request indicating a requirement required of the VNF. In a case where a VNF to be created indicated in the VNF request is a VNF to which a rule determined by the rule storage section 202 is to be applied, the NFVI selection section 205 selects a physical server according to the rule corresponding to the VNF. The NFVI selection section 205 sends a set of the selected physical server and the VNF request to the VM creation instruction section 207. It is to be noted that the VNF request may be Flavor information (vCPU number , memory amount, VM number or the like) or network information such as number of vNICs, NIC data transfer speed, VM configuration (duplication, N+1 redundancy) or the like, and it is received from the NFV Orchestrator300 or the VNF.

FIG. 6 is a diagram illustrating an example of a rule for selecting a physical server that is pre-set in the rule storage section 202. For example, in a case where the VNF to be created as indicated in the VNF request includes a maintenance function related VNFc, the NFVI selection section 205 selects a physical server group A with lower performance value than a physical server group B, in accordance with the first rule of FIG. 6. Similarly, in a case where the VNF to be created as indicated in the VNF request includes a user data related VNFc, the NFVI selection section 205 selects the physical server group B with higher performance value than the physical server group A, in accordance with the second rule of FIG. 6. Furthermore, in a case where the VNF to be created as indicated in the VNF request includes a VNFc set having a redundant configuration, the NFVI selection section 205 selects a physical server set of the same form, that is, of equivalent performance, in accordance with the third rule of FIG. 6. It is to be noted that selection of which physical server among the physical server group A and the physical server group B may be left to the VIM 100. Clearly, in the rule of FIG. 6, a specific physical server may be specified, or selection order of the physical servers may be specified, rather than specifying a physical server group. In a case of configuring a physical server group (for example, physical server group C) using the same type of physical server, the third rule from the top of FIG. 6 may be described as "select 2 from physical server group C".

The Vi-Vnfm communication section 206 is used in transmission of a VM creation instruction of the VIM 100, and in information exchange between the VNFM and VIM that receive a result thereof.

The VM creation instruction section 207 instructs the VIM 100 to create a VM corresponding to a VNFc, by specifying the selected physical server.

FIG. 7 is a diagram illustrating a configuration of the VIM of the first exemplary embodiment of the present invention. Referring to FIG. 7, a configuration is illustrated that is provided with a Vi-Vnfm communication section 101, an Or-Vi communication section 102, a VM creation section 103, an NFVI performance response section 104, an Nf-Vi communication section 105, an NFVI information management section 106, and an NFVI information storage section 107.

The Vi-Vnfm communication section 101 is used in reception of a VN creation request from the VNFM or in provision of information to the VNFM.

The Or-Vi communication section 102 is used in reception of a VN creation request from the NFV Orchestrator 300 and in provision of information to the NFV Orchestrator 300.

The VM creation section 103 creates a VM corresponding to a VNFc, in the specified physical server, in a case where there is a physical server specification from the VNFM 200.

The NFVI performance response section 104, in response to the request from the VNFM 200, reads physical server information from the NFVI information storage section 107, via the NFVI information management section 106, and responds to the VNFM 200.

FIG. 8 is a diagram illustrating an example of NFVI information provided to the VNFM 200 side from the VIM 100. In the example of FIG. 8, the number of CPUs of a physical server (Server A), clock number, memory size, disk size, IO performance (Input/Output performance), number of NICs (Network Interface Card), NIC data transmission speed and the like are recorded.

An Nf-Vi communication section 105 is used in an instruction to the NFVI to create a VM, in state exchange, or the like.

The NFVI information management section 106 collects NFVI information and records it in an NFVI information storage section 107. The NFVI information management section 106 extracts NFVI information from the NFVI information storage section 107, in response to a request from the NFVI performance response section 104, and performs transmission. It is to be noted that as NFVI information stored in the NFVI information storage section 107, in addition to specification information of each server shown in FIG. 8, state information of each server may be stored and provided to the VNFM 200.

It is to be noted that the respective parts (processing means) of the VNFM to the VIM shown in FIG. 5 and FIG. 7 may be implemented by a computer program that executes the abovementioned respective processing on a computer configuring these devices, using hardware thereof.

Next, a detailed description is given concerning operations of the present exemplary embodiment, making reference to the drawings. FIG. 9 is a sequence diagram illustrating operations of the first exemplary embodiment of the invention. Referring to FIG. 9, first, the VNFM 200 makes a request to the VIM 100 for NFVI information (step S001).

The VIM 100 that receives the request transmits the NFVI information to the VNFM 200 (step S002).

The VNFM 200 selects a physical server that can satisfy the VNF request, based on the NFVI information received from the VIM 100 (step S003).

The VNFM 200 specifies the selected physical server and instructs the VIM 100 to create a VNFc VM (step S004).

FIG. 10 is a flowchart illustrating selection operations of a physical server in step S003 of FIG. 9. First, the VNFM 200 selects one item of information of a physical server included in the NFVI information received from the VIM 100 (step S101).

Next, the VNFM 200 confirms whether or not the selected physical server satisfies the VNF request (Step S102). Here, in a case where the physical server does not satisfy the VNF request, the VNFM 200 returns to step S101 and selects another physical server (No in Step S102).

Next, the VNFM 200 confirms whether or not the selected physical server conforms with a rule determined in the rule storage section 202. Here, in a case where the selected physical server conforms with the rule determined in the rule storage section 202, the VNFM 200 determines the physical server as a deployment destination of the VNFc (step S104).

On the other hand, in a case where the physical server selected in step S101 does not conform with the rule prescribed in the rule storage section 202, the VNFM 200 confirms whether or not all the physical servers are confirmed (step S105). As a result of the confirmation, if all the physical servers are not confirmed, the VNFM 200 returns to step S101 and selects another physical server (No in Step S105).

On the other hand, as a result of confirming all of the physical servers, in a case where a physical server that can satisfy the VNF request was not found, the situation is that there is no relevant physical server, and VM creation is not possible. The VNFM 200 makes a request to deal with the situation, to the NFV Orchestrator 300, for example, such as adding a resource, or relaxing a VNF request.

As described above, according to the present exemplary embodiment, it is further possible to make a selection among the physical servers satisfying the VNF request, and to deploy the VNFc (VM). In this way, optimization of deployment of the VNFc (VM) configuring the VNF is achieved.

A description has been given above of respective exemplary embodiments of the present invention, but the present invention is not limited to the abovementioned exemplary embodiments, and modifications, substitutions and adjustments may be added within a scope that does not depart from fundamental technical concepts of the invention. Network configurations, respective element configurations and message expression forms shown in the respective drawings are examples for the purpose of aiding understanding of the invention, and are not intended to limit the invention to configurations illustrated in the drawings.

For example, the abovementioned first exemplary embodiment has a description in which the VNFM 200 transmits an instruction to create the VNFc (VM) to the VIM 100 directly, but application is also possible to a case where the VNFM 200 gives an instruction to create the VNFc (VM) to the VIM 100 via the NFV Orchestrator 300.

The abovementioned exemplary embodiment has a description in which the VIM 100 responds to the VNFM 200 with physical server information exemplified in FIG. 8, but the physical server information is not limited to a mode illustrated in FIG. 8. For example, selection of an appropriate physical server is possible when the VNFM 200 selects a physical server in which a VM is deployed. For example, instead of various types of performance values in the physical server illustrated in FIG. 8, a response with the physical server model number or product name is possible. In the same way, instead of various types of performance values in the physical server illustrated in FIG. 8, the VIM 100 may respond with server rank information that separates by hierarchical rank the various types of performance values of the physical server illustrated in FIG. 8. For example, the VIM 100 may respond with server rank information such as having a physical server with high performance as AAA and a physical server with low performance as CCC.

Finally, preferred modes of the present invention are summarized.

### <First Mode>

(Refer to the virtual network function management apparatus according to the first aspect described above.)

### <Second Mode>

A physical machine selection section of the virtual network function management apparatus may be configured so as to select, at least, a physical machine of low performance, among physical machines satisfying required performance, with respect to a prescribed virtual network function of required performance lower than another virtual network function.

### <Third Mode>

The virtual network function management apparatus is further provided with a rule storage part configured to contain a selection rule for a physical machine allocated to a virtual network function, in response to type of virtual network function, and the physical machine selection section may be configured to refer to the selection rule to select a physical machine satisfying a criterion required of the virtual network function.

### <Fourth Mode>

The virtual network function management apparatus may be configured such that the selection rule includes a selection rule that selects, with respect to a prescribed virtual network function having a redundant configuration by a plurality of virtual machines, a set of the same type of physical machines as deployment destination of virtual machines having the redundant configuration.

### <Fifth Mode>

A physical machine candidate query section of the virtual network function management apparatus may be configured to query a physical machine candidate, via an orchestrator that controls overall virtual network function infrastructure that is configured by the physical machine.

### <Sixth Mode>

(Refer to the virtual infrastructure management apparatus according to the second aspect described above.)

### <Seventh Mode>

(Refer to the virtual network function providing system according to the third aspect described above.)

### <Eighth Mode>

(Refer to the virtual network function configuration method according to the fourth aspect described above.)

### <Ninth Mode>

(Refer to the virtual network function configuration method according to the fifth aspect described above.)

### <Tenth Mode>

### (Refer to the program according to the sixth aspect described above.)

It is to be noted that the sixth to tenth modes described above may be expanded with regard to the second to fifth modes, similar to the first mode.

It is to be noted that the various disclosures of the abovementioned Patent Literature and Non-Patent Literature are incorporated herein by reference thereto. Modifications and adjustments of exemplary embodiments and examples may be made within the bounds of the entire disclosure (including the scope of the claims) of the present invention, and also based on fundamental technological concepts thereof. Various combinations and selections of various disclosed elements (including respective elements of the respective claims, respective elements of the respective exemplary embodiments and examples, respective elements of the respective drawings and the like) are possible within the scope of the disclosure of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values and small ranges included in the relevant ranges should be interpreted to be specifically described even where there is no particular description thereof.

### REFERENCE SIGNS LIST

- 10A: virtual network function management apparatus
- 11A: physical machine candidate query part
- 12A: physical machine selection part
- 13A: virtual machine creation instruction part
- 20A: virtual infrastructure management apparatus
- 21A: physical machine candidate response part
- 22A: virtual machine creation part
- 100: VIM (Virtualized Infrastructure Manger)
- 101: Vi-Vnfm communication section
- 102: Or-Vi communication section
- 103: VM creation section
- 104: NFVI performance response section
- 105: Nf-Vi communication section
- 106: NFVI information management section
- 107: NFVI information storage section
- 200: VNFM
- 201: Or-Vnfm communication section
- 202: rule storage section
- 203: Vnf-Vnfm communication section
- 204: NFVI performance query section
- 205: NFVI selection section
- 206: Vi-Vnfm communication section
- 207: VM creation instruction section
- 300: NFV Orchestrator

## Claims

1. A virtual network function management apparatus comprising:
a physical machine candidate query part configured to query, when creating a virtual network function, about a physical machine candidate in which a virtual machine configuring a virtual network function can be deployed, with respect to a virtual infrastructure management apparatus that manages a virtual infrastructure configured by using 2 or more types of physical machine;
a physical machine selection part configured to select a physical machine that can satisfy performance required by the virtual network function, from among physical machine candidates received from the virtual infrastructure management apparatus; and
a virtual machine creation instruction part configured to instruct the virtual infrastructure management apparatus to specify the selected physical machine and create a virtual machine configuring the virtual network function.

2. The virtual network function management apparatus according to claim 1, wherein
the physical machine selection part configured to select, at least, a physical machine of low performance, among physical machines satisfying required performance, with respect to a prescribed virtual network function of required performance lower than another virtual network function.

3. The virtual network function management apparatus according to claim 1 or 2, further comprising:
a rule storage part configured to contain a selection rule for a physical machine allocated to a virtual network function, in response to type of virtual network function; wherein
the physical machine selection part refers to the selection rule to select a physical machine satisfying a criterion required of the virtual network function.

4. The virtual network function management apparatus according to claim 3, wherein
the selection rule includes a selection rule that selects, with respect to a prescribed virtual network function having a redundant configuration by a plurality of virtual machines, a set of the same type of physical machines as deployment destination of virtual machines having the redundant configuration.

5. The virtual network function management apparatus according to any one of claims 1 to 4, wherein
the physical machine candidate query part queries a physical machine candidate, via an orchestrator that controls overall virtual network function infrastructure that is configured by the physical machines.

6. A virtual infrastructure management apparatus comprising:
a physical machine candidate response part configured to respond, in response to a query from a virtual network function management apparatus, with a physical machine candidate in which a virtual machine configuring a virtual network function can be deployed, from among 2 or more types of physical machine that configure a virtual infrastructure; and
a virtual machine creation part configured to create a virtual machine using a physical machine specified by the virtual network function management apparatus.

7. A virtual network function providing system comprising:
a virtual network function management apparatus that comprises:
a physical machine candidate query part configured to query, when creating a virtual network function, about a physical machine candidate in which a virtual machine configuring a virtual network function can be deployed, with respect to a virtual infrastructure management apparatus that manages a virtual infrastructure configured by using 2 or more types of physical machine;
a physical machine selection part configured to select a physical machine that can satisfy performance required by the virtual network function, from among physical machine candidates received from the virtual infrastructure management apparatus; and
a virtual machine creation instruction part configured to instruct the virtual infrastructure management apparatus to specify the selected physical machine and create a virtual machine configuring the virtual network function; and
a virtual infrastructure management apparatus that comprises:
a physical machine candidate response part configured to respond, in response to a query from the virtual network function management apparatus, with a physical machine candidate in which a virtual machine configuring a virtual network function can be deployed; and
a virtual machine creation part configured to create a virtual machine using a physical machine specified by the virtual network function management apparatus.

8. A virtual network function configuration method, wherein a virtual network function management apparatus included in a virtual network function providing system:
queries, when creating a virtual network function, about a physical machine candidate in which a virtual machine configuring a virtual network function can be deployed, with respect to a virtual infrastructure management apparatus that manages a virtual infrastructure configured by using 2 or more types of physical machine;
selects a physical machine that can satisfy performance required by the virtual network function, from among physical machine candidates received from the virtual infrastructure management apparatus; and
instructs the virtual infrastructure management apparatus to specify the selected physical machine and create a virtual machine configuring the virtual network function.

9. A virtual network function configuration method, wherein a virtual infrastructure management apparatus included in a virtual network function providing system:
responds, in response to a query from a virtual network function management apparatus, with a physical machine candidate in which a virtual machine configuring a virtual network function can be deployed, from among 2 or more types of physical machine that configure a virtual infrastructure; and
creates a virtual machine using a physical machine specified by the virtual network function management apparatus.

10. A program that causes a computer configuring a virtual network function management apparatus included in a virtual network function providing system, to execute processing comprising:
querying, when creating a virtual network function, a physical machine candidate in which a virtual machine configuring a virtual network function can be deployed, with respect to a virtual infrastructure management apparatus that manages a virtual infrastructure configured by using 2 or more types of physical machine;
selecting a physical machine that can satisfy performance required by the virtual network function, from among physical machine candidates received from the virtual infrastructure management apparatus; and
instructing the virtual infrastructure management apparatus to specify the selected physical machine and create a virtual machine configuring the virtual network function.

11. A program that causes a computer configuring a virtual infrastructure management apparatus included in a virtual network function providing system, to execute processing comprising:
responding, in response to a query from a virtual network function management apparatus, with a physical machine candidate in which a virtual machine configuring a virtual network function can be deployed, from among 2 or more types of physical machine that configure a virtual infrastructure; and
creating a virtual machine using a physical machine specified by the virtual network function management apparatus.
